# EUROPEAN PATENT APPLICATION

(11) **EP 4 738 290 A1**
(43) Date of publication of application: **06.05.2026**
(21) Application number: 25192675.4
(22) Date of filing: 30.07.2025
(51) Int. Cl.: G06V 20/56

(54) **CONTROL METHOD AND APPARATUS FOR VEHICLE**

(30) Priority: 30.10.2024 KR 20240151042
(71) Applicant: Hyundai Mobis Co., Ltd., Gangnam-gu Seoul 06141 (KR)
(72) Inventor: JIN, Moon Yong, 16891 Yongin-si, Gyeonggi-do (KR)
(74) Representative: Jung, Minkyu

(57) **Abstract**

A control apparatus for a vehicle according to one embodiment may include a vehicle position detection unit that detects a position of a vehicle, a bad condition environment recognition unit that recognizes whether a surrounding environment of the vehicle is in bad condition, and a control unit that controls at least a part of the vehicle based on whether the surrounding environment is in bad condition, and the control unit may perform control to clean at least a part of a sensor or a photographing device mounted on the vehicle, or perform control to warn a user of the vehicle when the surrounding environment of the vehicle is in bad condition.

## Description

### CROSS-REFERENCE TO RELATED APPLICATION

**This** application claims priority to and the benefit of Korean Patent Application No. 2024-0151042, filed on October 30, 2024, the disclosure of which is incorporated herein by reference in its entirety.

### BACKGROUND

### 1. Field of the Invention

**One** embodiment of the present invention relates to a control method and apparatus for a vehicle, and more particularly, to a method of improving highway driving assistance through surround view monitoring (SVM) camera lane recognition when driving at night in rainy weather.

### 2. Discussion of Related Art

**When** a vehicle is traveling at night, since lanes on the road may not be recognized in bad weather conditions, the risk of accidents may increase.

In particular, when at night in rainy weather, since the lanes are often not visible due to low light and ground light reflection, in a bad condition environment, the risk of accidents due to lane departure may increase.

In order to solve these problems, it is intended to suggest a method of improving driving assistance through surround view monitoring (SVM) camera lane recognition when driving at night in rainy weather by utilizing a highway driving assist (HDA) function and a lane recognition function.

### SUMMARY OF THE INVENTION

According to an aspect of the present invention, there is provided a control apparatus for a vehicle including a vehicle position detection unit that detects a position of a vehicle, a bad condition environment recognition unit that recognizes whether a surrounding environment of the vehicle is in bad condition, and a control unit that controls at least a part of the vehicle based on whether the surrounding environment is in bad condition, in which the control unit performs control to clean at least a part of a sensor or a photographing device mounted on the vehicle, or performs control to warn a user of the vehicle when the surrounding environment of the vehicle is in bad condition.

According to one embodiment, the vehicle position detection unit may detect the position of the vehicle based on a lane of a road on which the vehicle is currently positioned.

According to one embodiment, the bad condition environment recognition unit may recognize the surrounding environment of the vehicle as a bad condition environment when the lane of the road on which the vehicle is currently positioned is not recognized or the position of the vehicle is not detected.

According to one embodiment, the bad condition environment recognition unit may recognize the surrounding environment of the vehicle as a bad condition environment when it is determined that a captured image acquired from the photographing device mounted on the vehicle is in a low light or bad condition using deep learning.

According to one embodiment, the control unit may control a driving assist unit when a lane of a road on which the vehicle is currently positioned is recognized or the position of the vehicle is detected.

According to an aspect of the present invention, there is provided a control method for a vehicle, including detecting a position of a vehicle, recognizing whether a surrounding environment of the vehicle is in bad condition, and controlling at least a part of the vehicle based on whether the surrounding environment is in bad condition, in which, in the controlling, control is performed to clean at least a part of a sensor or a photographing device mounted on the vehicle, or control is performed to warn a user of the vehicle when the surrounding environment of the vehicle is in bad condition.

According to one embodiment, in the detecting, the position of the vehicle may be detected based on a lane of a road on which the vehicle is currently positioned.

According to one embodiment, in the recognizing, the surrounding environment of the vehicle may be recognized as a bad condition environment when the lane of the road on which the vehicle is currently positioned is not recognized or the position of the vehicle is not detected.

According to one embodiment, in the recognizing, the surrounding environment of the vehicle may be recognized as a bad condition environment when it is determined that a captured image acquired from the photographing device mounted on the vehicle is in a low light or bad condition using deep learning.

According to one embodiment, in the controlling, a driving assist unit may be controlled when a lane of a road on which the vehicle is currently positioned is recognized or the position of the vehicle is detected.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a block diagram of a control apparatus for vehicles according to one embodiment;
FIG. 2 is a flowchart of a control method for vehicles according to one embodiment;
FIG. 3 is a diagram showing a control method for vehicles according to one embodiment;
FIG. 4 is a view showing a vehicle according to one embodiment;
FIG. 5 is a diagram showing a flow of bad condition determination in the control method for vehicles according to one embodiment;
FIG. 6 is a diagram showing a flow of host vehicle position determination in the control method for vehicles according to one embodiment; and
FIGS. 7A to 7E are views showing lane recognition of the control method for vehicles according to one embodiment.

### DETAILED DESCRIPTION OF EXEMPLARY EMBODIMENTS

Hereinafter, preferred embodiments of the present invention will be described in detail with reference to the accompanying drawings.

However, the technical idea of the present invention is not limited to some embodiments to be described but may be implemented in various different forms, and within the scope of the technical idea of the present invention, one or more among components in the embodiments may be used by being selectively combined and substituted.

Further, unless specifically defined and described, terms used in the embodiments of the present invention (including technical and scientific terms) may be interpreted as meanings which are generally understood by those skilled in the art to which the present invention pertains, and commonly used terms such as terms defined in dictionaries may be interpreted in consideration of the contextual meaning of the related art.

The terms used in the embodiments of the present invention are for the purpose of describing the embodiments only and are not intended to limit the invention.

In the present specification, the singular forms may include the plural forms unless the context clearly dictates otherwise, and when described as "at least one (or one or more) among A, B, and (or) C," it may include one or more of all possible combinations of A, B, and C.

In addition, when describing components of embodiments of the present invention, terms such as first, second, A, B, (a), (b), etc., may be used.

These terms are only for distinguishing the components from other components, and the essence, sequence, or order of the components is not limited by these terms.

In addition, when a component is described as being "linked," "coupled," or "connected" to another component, the component is not only directly linked, coupled, or connected to another component, but also "linked," "coupled," or "connected" to another component with still another component disposed between the component and the other component.

Further, when a component is described as being formed or disposed "on (above) or under (below)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

Hereinafter, embodiments will be described in detail with reference to the accompanying drawings, but the same or corresponding components are denoted by the same reference numerals regardless of the drawing numbers, and redundant descriptions thereof will be omitted.

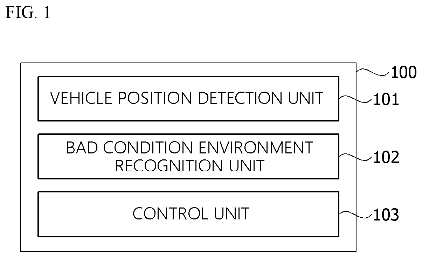

FIG. 1 is a block diagram of a control apparatus for vehicles according to one embodiment.

According to one embodiment, a control apparatus 100 for vehicles may include a vehicle position detection unit 101 that detects a position of a vehicle, a bad condition environment recognition unit 102 that recognizes whether a surrounding environment of the vehicle is in bad condition (or in a bad condition environment), and a control unit 103 that controls at least a part of the vehicle based on whether the surrounding environment is in bad condition.

Components of the control apparatus for vehicles according to one embodiment may be configured to include at least some of a vehicle, a light, a camera, a sensor, an ultrasonic generator/cleaning device, a machine, a circuit, a semiconductor, a computing device, a memory, a processor, a data transceiver, a display, a speaker, and the like, and at least a part of each component may be mechanically/physically/communicatively/electrically connected to at least a part of another component. The processor of the vehicle control system according to an exemplary embodiment of the present disclosure may be a hardware device implemented by various electronic circuits (e.g., computer, microprocessor, CPU, ASIC, circuitry, logic circuits, etc.). The processor may be implemented by a non-transitory memory storing, e.g., a program(s), software instructions reproducing algorithms, etc., which, when executed, performs various functions described hereinafter, and a processor configured to execute the program(s), software instructions reproducing algorithms, etc. Herein, the memory and the processor may be implemented as separate semiconductor circuits. Alternatively, the memory and the processor may be implemented as a single integrated semiconductor circuit. The processor may embody one or more processor(s).

Components of the control apparatus for vehicles according to one embodiment may include/utilize at least some of all components of the specification or drawings, and may perform at least some of all functions/operations of the specification or drawings.

According to one embodiment, the control apparatus for vehicles may output/transmit at least some of all components of the specification or drawing through a display/speaker or the like mounted on the vehicle.

According to one embodiment, the control unit 103 may perform control to clean at least a part of a sensor or a photographing device mounted on the vehicle, or perform control to warn a user of the vehicle, when the surrounding environment of the vehicle is in bad condition.

According to one embodiment, the control apparatus for vehicles may determine/decide the surrounding environment as a bad condition environment when a sensing value exceeding/equal to or greater than a preset threshold value is acquired using various methods/manners. The bad condition environment may include a condition such as yellow dust, dust, snow, rain, and the like exceeding a normal range, or a condition where a lane is not accurately recognized.

According to one embodiment, the vehicle position detection unit 101 may detect the position of the vehicle based on lanes of the road on which the vehicle is currently positioned. The position of the vehicle may include at least some of all forms/formats (e.g., GPS coordinates) capable of determining/deciding a position such as a relative position, absolute position, or the like.

According to one embodiment, the vehicle position detection unit 101 may include at least a part of a lane-based host vehicle position determination module and the like.

According to one embodiment, the bad condition environment recognition unit 102 may recognize the surrounding environment of the vehicle as a bad condition environment when the lane of the road on which the vehicle is currently positioned is not recognized or the position of the vehicle is not detected.

According to one embodiment, the bad condition environment recognition unit 102 may include at least a part of a bad condition environment determination module and the like.

According to one embodiment, the bad condition environment recognition unit 102 may recognize the surrounding environment of the vehicle as a bad condition environment when it is determined that the captured image acquired from the photographing device (e.g., the camera) mounted on the vehicle is in a low light or bad condition using deep learning.

According to one embodiment, the control unit 103 may control a driving assist unit when the lane of the road on which the vehicle is currently positioned is recognized or the position of the vehicle is detected.

According to one embodiment, the driving assist unit may include at least a part of a highway driving assist (HDA) unit and the like.

According to one embodiment, the control apparatus for vehicles has the advantage of improving highway driving assist functions and reducing driver accidents through the SVM camera and the like. Unlike a front camera, the SVM camera contains less long-distance information, but contains a lot of close-distance information, so that the SVM camera may be suitable for close-distance recognition.

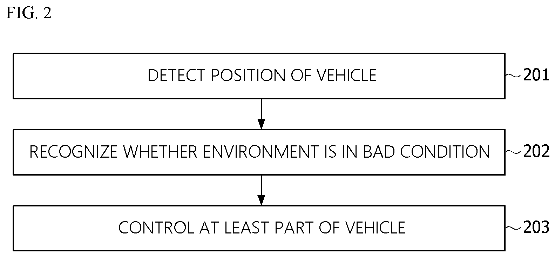

FIG. 2 is a flowchart of a control method for vehicles according to one embodiment.

According to one embodiment, each operation of the control method for vehicles may be performed by at least some of components of the control apparatus for vehicles.

In operation 201, the control apparatus for vehicles may detect a position of a vehicle.

According to one embodiment, the control apparatus for vehicles may detect the position of the vehicle based on a lane of a road on which the vehicle is currently positioned.

In operation 202, the control apparatus for vehicles may recognize whether the surrounding environment of the vehicle is in bad condition.

According to one embodiment, the control apparatus for vehicles may recognize the surrounding environment of the vehicle as a bad condition environment when the lane of the road on which the vehicle is currently positioned is not recognized or the position of the vehicle is not detected.

According to one embodiment, the control apparatus for vehicles may recognize the surrounding environment of the vehicle as a bad condition environment when a captured image acquired from the photographing device mounted on the vehicle is determined to be in a low light or bad condition using deep learning.

According to one embodiment, the control apparatus for vehicles may recognize the surrounding environment as a bad condition environment when a sensing value acquired from a sensor (e.g., a rain sensor) mounted on the vehicle exceeds a preset threshold value.

According to one example, the control apparatus for vehicles may recognize the surrounding environment as a bad condition environment when the image is determined/decided as a low light condition using the sensor or the like.

In operation 203, the control apparatus for vehicles may control at least a part of the vehicle based on whether the surrounding environment is in bad condition.

According to one embodiment, at least a part of the vehicle may include a cleaning device for lamps/lights, a photographing device/sensor or the like of the vehicle, or a display/speaker or the like.

According to one embodiment, the control apparatus for vehicles may perform control to clean at least a part of the sensor or the photographing device mounted on the vehicle, or perform control to warn a user/driver of the vehicle, when the surrounding environment of the vehicle is in bad condition.

According to one embodiment, the control apparatus for vehicles may generate/output/transmit a control signal for control.

According to one embodiment, the display/speaker or the like may output/display content such as a message or image that indicates a meaning of warning about a bad condition/an inability to recognize a lane, a driving caution, and the like to the user of the vehicle.

According to one embodiment, the control apparatus for vehicles may control the driving assist unit when the lane of the road on which the vehicle is currently positioned is recognized or the position of the vehicle is detected.

According to one embodiment, the control apparatus for vehicles may provide additional information to an existing highway driving assist function not only when driving at night in rainy weather but also when driving in general conditions, thereby improving performance.

According to one embodiment, the control apparatus for vehicles may improve convenience to prevent the highway driving assist function from being turned off even in a bad condition environment through lane recognition around a host vehicle, thereby reducing inconvenience to the driver who is the user of the vehicle.

According to one embodiment, the control apparatus for vehicles may be implemented using an SVM camera sensor, an electronic control unit (ECU), and the like, at reduced costs, so that there is an advantage of not incurring additional costs.

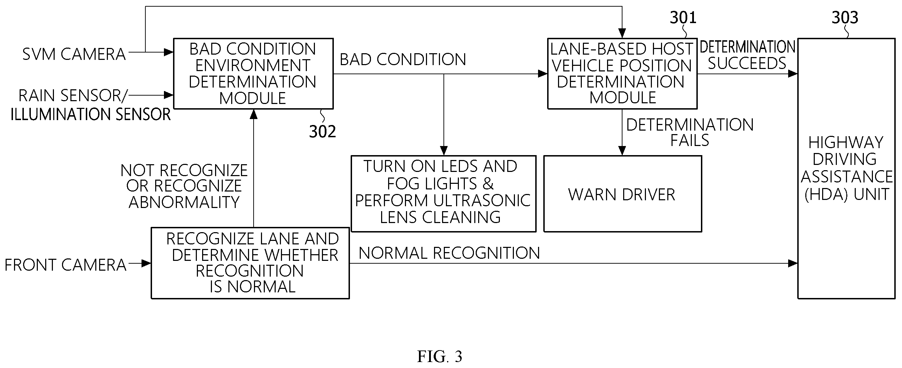

FIG. 3 is a diagram showing a control method for vehicles according to one embodiment.

According to one embodiment, the control apparatus for vehicles may determine a lane-based host vehicle position through a plurality of SVM cameras, a rain sensor/illumination sensor, a front camera, and the like, and transmit the information to a driving assist unit, such as a highway driving assist unit. The control apparatus for vehicles may recognize a bad condition environment using the SVM cameras and rain sensor/illumination sensor when the front camera fails lane recognition. The control apparatus for vehicles may turn on LEDs and fog lights mounted on a lower portion of a side bumper of the vehicle to facilitate lane recognition even in a low light condition when it is determined that the condition is a bad condition and perform ultrasonic lens cleaning to remove foreign substances from a lens or the like of a sensor such as a camera lens.

According to one embodiment, the control apparatus for vehicles may determine the condition using a lane-based host vehicle position determination module 301, a bad condition environment determination module 302, and the like and transmit/convey a signal representing information/control to a highway driving assist (HDA) unit 303 according to a determination result.

According to one embodiment, the control apparatus for vehicles may turn on LEDs and fog lights and clean lenses of the camera/sensor, and the like by using/outputting ultrasonic waves/high-frequency vibrations or the like when it is determined/decided that the surrounding environment is in bad condition.

According to one embodiment, the control apparatus for vehicles may control/generate to transmit an alarm, steering vibration, or the like as a warning to the driver when a lane is not recognized or the position of the vehicle is not determined/decided or the determination fails.

According to one embodiment, the control apparatus for vehicles may convey/transmit information related to control/environment or the like to a device for autonomous/assisted driving, such as the highway driving assist (HDA) unit, when it is determined that the condition is a normal condition in which a lane is recognized.

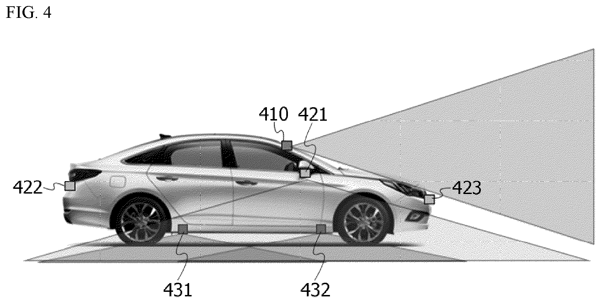

FIG. 4 is a view showing a vehicle according to one embodiment.

According to one embodiment, a control apparatus for vehicles may include or control a camera 410 mounted on the vehicle, such as a front camera that photographs the front of the vehicle, and may communicate with the camera 410.

According to one embodiment, the control apparatus for vehicles may include or control surround view monitor (SVM) cameras 421, 422, and 423 mounted on the vehicle (front/rear/side/lateral and the like of the vehicle), and may communicate with the cameras mounted on the vehicle, such as the SVM cameras 421, 422, and 423.

According to one embodiment, the control apparatus for vehicles may include or control lights 431 and 432 mounted on the vehicle, such as light emitting diodes (LEDs), and may communicate with the lights 431 and 432.

According to one embodiment, the control apparatus for vehicles may detect a lane-based host vehicle position through, for example, four SVM cameras, a rain sensor/illumination sensor, the front camera, and the like and transmit information such as sensing information or position information to a driving assist unit. When lane recognition fails using the cameras and the like of the vehicle, the SVM cameras, the rain sensor/illumination sensor, and the like may be used to detect whether the surrounding environment is in bad condition. When it is determined that the conditions are bad, the control apparatus for vehicles may perform control to turn on lights mounted on the vehicle for lane recognition even in a low light condition, and to perform control to clean using ultrasonic waves to remove foreign substances on at least a part of the vehicle, such as a camera lens.

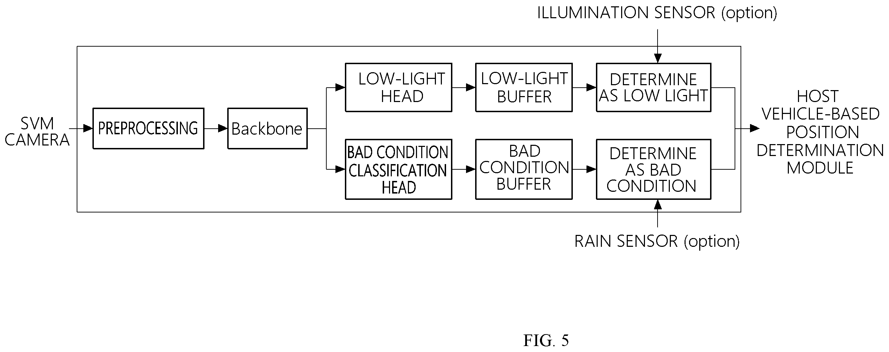

FIG. 5 is a diagram showing a flow of bad condition determination in the control method for vehicles according to one embodiment.

According to one embodiment, when a bad condition environment, such as partial obscuration (e.g., dust, dirt, or the like), water condensation, low light or the like is determined based on an image/video acquired by processing an image acquired from the photographing device, such as a camera or the like mounted on the vehicle, the control apparatus for vehicles may transmit/convey information on the bad condition environment.

According to one embodiment, the control apparatus for vehicles may perform/use preprocessing, backbone, low-light/bad condition classification head, low-light/bad condition buffer, low-light/bad condition determination, or the like on an image acquired from the photographing device such as a camera mounted on the vehicle (based on/using sensing information/values acquired from the illumination sensor/rain sensor or the like).

Referring to FIG. 5, a bad condition environment determination module and the like may be seen. The control apparatus for vehicles may resize the video/image acquired from the input SVM camera to a smaller size and perform/control normalization thereof for fast processing time. The control apparatus for vehicles may determine a bad condition and low light through a deep learning network or the like and accumulate the number of classes determined for each buffer (e.g., normal, partial obscuration, water condensation, or the like). The control apparatus for vehicles may classify a plurality of frames into the low light/the bad condition through a network or the like and, when the number of classes that has accumulated to a certain threshold value or more is confirmed, may output the corresponding class. The control apparatus for vehicles may accumulate low light classification values (e.g., normal, low light) even in a low light buffer, and when a class that has accumulated to the certain threshold value or more is confirmed, may output the corresponding class. The control apparatus for vehicles may improve accuracy by referring to the values/sensing values of the illumination sensor and the rain sensor. The control apparatus for vehicles may transmit a signal indicating the determination as to whether the image is a low-light or bad condition to a host vehicle-based position determination module and the like.

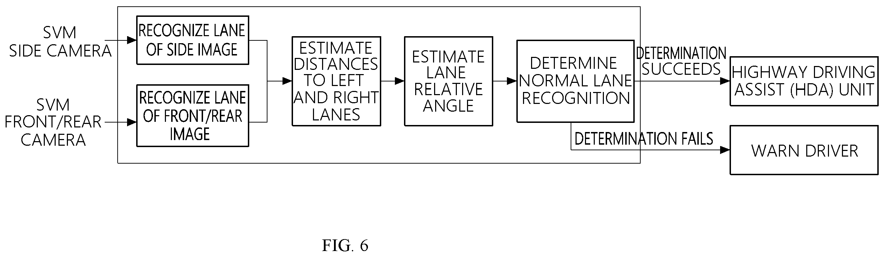

FIG. 6 is a diagram showing a flow of host vehicle position determination in the control method for vehicles according to one embodiment.

According to one embodiment, the control apparatus for vehicles may perform/use (top view) front/rear/side image lane recognition, left and right lane distance estimation, lane relative angle estimation, lane normal recognition determination, and the like based on/using images acquired from an SVM camera and the like.

According to one embodiment, the control apparatus for vehicles may transmit/convey information/signals or the like indicating normal/a lane recognition condition/a situation to an autonomous/assist driving device, such as a highway driving assist unit, when a lane is normally recognized and the determination/recognition is successful.

According to one embodiment, the control apparatus for vehicles may generate/output/control a driver warning message/alarm, or the like through an output device (e.g., a display, a speaker) mounted on the vehicle when a lane is not normally recognized and the determination/recognition fails.

According to one embodiment, the control apparatus for vehicles may determine and detect a host vehicle position of the vehicle based on a lane using SVM camera images. In cases where it is difficult to detect or determine the position of the host vehicle, a warning is issued to a driver, who is the user of the vehicle, and when the determination/detection is successful, information may be conveyed/transmitted to the driving assist unit, such as a highway driving assist unit, to allow at least a part of the vehicle to be controlled.

Referring to FIG. 6, the control apparatus for vehicles may perform the determination of the position of the host vehicle based on the lane. The control apparatus for vehicles may recognize a lane using a SVM side cameras and SVM front/rear cameras and estimate the distances to left and right lanes based on the vehicle.

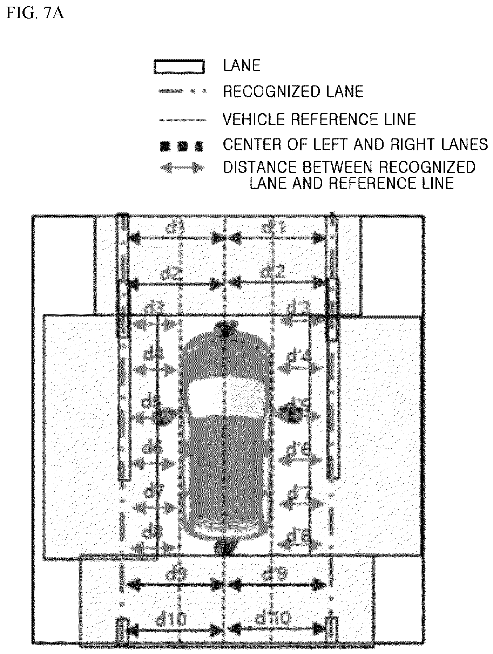

FIGS. 7A to 7E are views showing lane recognition of the control method for vehicles according to one embodiment.

Referring to FIGS. 7A to 7E, an example of left and right lane distance estimation and relative angle estimation may be seen.

Referring to FIG. 7A, in a normal driving case, the control apparatus for vehicles may recognize a lane of a road on which the vehicle is traveling using an image acquired based on an SVM camera.

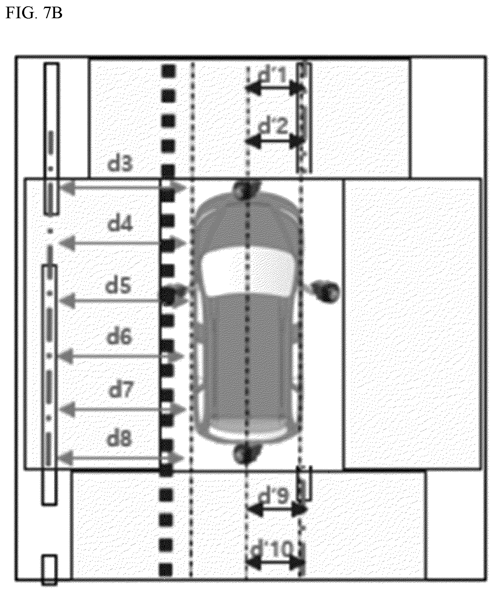

Referring to FIG. 7B, in an abnormal driving case such as lane crossing, the control apparatus for vehicles may detect/determine a case/situation in which the vehicle is biased to a right/right side.

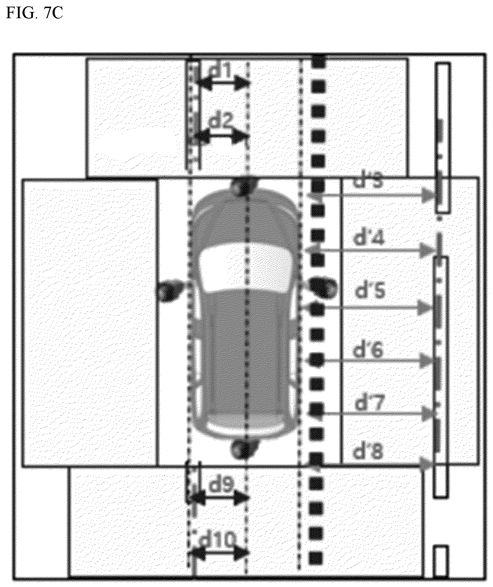

Referring to FIG. 7C, in the abnormal driving case, the control apparatus for vehicles may detect/determine a case/situation in which the vehicle is biased to a left/left side.

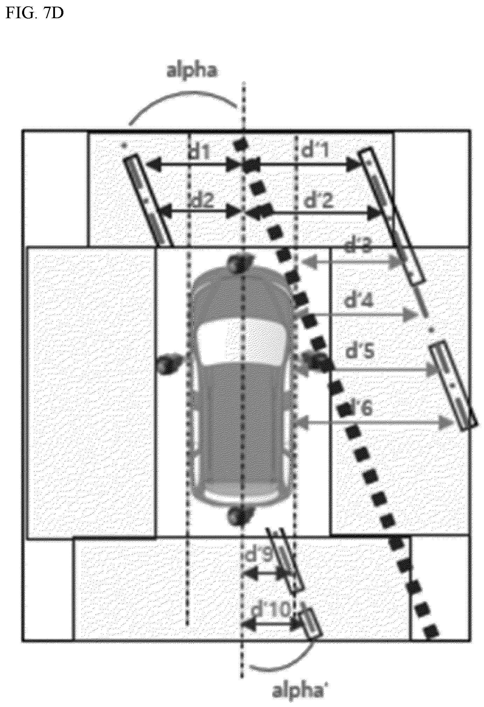

Referring to FIG. 7D, in the abnormal driving case, the control apparatus for vehicles may detect/determine a case/situation in which the vehicle is biased to a left/left diagonal.

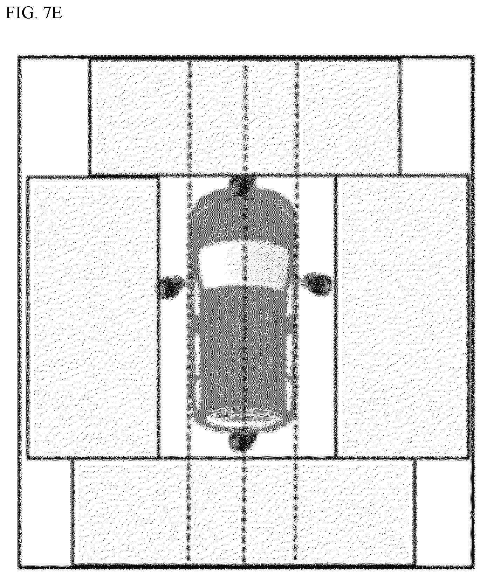

Referring to FIG. 7E, in a determination failure case, the control apparatus for vehicles may detect/determine a case/situation in which lane recognition determination fails, such as lane non-recognition or determination impossibility.

According to one embodiment, the control apparatus for vehicles may determine the driving as normal driving when |d - d'|, where a distance between a left lane and the vehicle is d and a distance between a right lane and the vehicle is d', is less than a certain threshold value.

According to one embodiment, the control apparatus for vehicles may calculate/produce a difference value L between left lane distances d and a difference value R between right lane distances d' when |d - d'| is greater than the threshold value.

According to one embodiment, the control apparatus for vehicles may determine that the vehicle is traveling in a parallel but biased lane when both the L and R values are less than a preset threshold value, and may convey/transmit a distance value between a center position of the lanes and a center position of the vehicle to the highway driving assist unit.

According to one embodiment, the control apparatus for vehicles may determine that the vehicle is traveling in a biased lane when the L or R value is greater than the threshold value, and calculate/produce an angle alpha between the lane and the vehicle. The control apparatus for vehicles may calculate/produce the alpha based on a reliable lane recognized to be closet among the front/rear/side cameras. The control apparatus for vehicles may estimate centerlines of the vehicle and the lane using the alpha and a distance value for each position, and convey/transmit a distance value between the vehicle and the centerline and the alpha value to the highway driving assist unit.

According to one embodiment, the control apparatus for vehicles may convey/transmit/output a signal capable of warning a driver when no lane is recognized or recognized but not possible to be determined.

According to one embodiment, the control apparatus for vehicles may represent distances between a lane positioned around the vehicle and the vehicle or a reference line (or an extension of the center line) of the vehicle as variables/constants meaning a plurality of distances from d1 to dn (e.g., n is a natural number equal to or greater than 2, such as 10).

According to one embodiment, coordinates of d1 to dn may be expressed as two-dimensional coordinates such as (x, y) based on the vehicle, and y-coordinates of d1 to dn may be spaced apart by a certain interval.

According to one embodiment, when the x-coordinates of start points or end points of at least some of the coordinates of d1 to dn (e.g., d3 to d8 or d9 to d10) are different, the driving may be determined/decided as abnormal.

According to one embodiment, when the coordinates of d1 to dn are not recognized, it may be recognized/determined/decided that the determination fails.

The term "~unit" used in the present embodiment refers to software components or hardware components such as a field-programmable gate array (FPGA) or an application specific integrated circuit (ASIC), and "~unit" performs certain functions. However, the "~unit" is not limited to software or hardware. The "~unit" may be configured to reside in an addressable storage medium, or may be configured to reproduce one or more processors. Therefore, for example, "~unit" includes components such as software components, object-oriented software components, class components, and task components, and includes processes, functions, attributes, procedures, sub-routines, segments of program code, drivers, firmware, micro code, circuits, data, a database, data structures, tables, arrays, and variables. Functions provided in the components and the "~unit" may be combined into smaller numbers of components and "~units," or may be further divided into additional components and "~units." Furthermore, the components and "~units" may be implemented to reproduce one or more CPUs in a device or a security multimedia card.

Although the preferred embodiments of the present invention have been described above, it is understood that those skilled in the art may make various changes and modifications to the present invention without departing from the spirit and scope of the present invention set forth in the claims below.

## Claims

1. A control apparatus for a vehicle, comprising:
a processor configured to:
detect a position of a vehicle;
recognize whether a surrounding environment of the vehicle is in bad condition; and
control at least a part of the vehicle based on whether the surrounding environment is in bad condition,
wherein the processor performs control to clean at least a part of a sensor or a photographing device mounted on the vehicle, or performs control to warn a user of the vehicle when the surrounding environment of the vehicle is in bad condition.

2. The control apparatus of claim 1, wherein the processor is further configured to detect the position of the vehicle based on a lane of a road on which the vehicle is currently positioned.

3. The control apparatus of claim 2, wherein the processor is further configured to recognize the surrounding environment of the vehicle as a bad condition environment when the lane of the road on which the vehicle is currently positioned is not recognized or the position of the vehicle is not detected.

4. The control apparatus of any one of claims 1 to 3, wherein the processor is further configured to recognize the surrounding environment of the vehicle as a bad condition environment when it is determined that a captured image acquired from the photographing device mounted on the vehicle is in a low light or bad condition using deep learning.

5. The control apparatus of any one of claims 1 to 4, wherein the processor is configured to control a driving assist unit when a lane of a road on which the vehicle is currently positioned is recognized or the position of the vehicle is detected.

6. A control method for a vehicle, comprising:
detecting a position of a vehicle;
recognizing whether a surrounding environment of the vehicle is in bad condition; and
controlling at least a part of the vehicle based on whether the surrounding environment is in bad condition,
wherein, the controlling comprises performing control to clean at least a part of a sensor or a photographing device mounted on the vehicle, or performing control to warn a user of the vehicle when the surrounding environment of the vehicle is in bad condition.

7. The control method of claim 6, wherein, the detecting comprises detecting the position of the vehicle based on a lane of a road on which the vehicle is currently positioned.

8. The control method of claim 7, wherein, the recognizing comprises recognizing the surrounding environment of the vehicle as a bad condition environment when the lane of the road on which the vehicle is currently positioned is not recognized or the position of the vehicle is not detected.

9. The control method of any one of claims 6 to 8, wherein, the recognizing comprises recognizing the surrounding environment of the vehicle as a bad condition environment when it is determined that a captured image acquired from the photographing device mounted on the vehicle is in a low light or bad condition using deep learning.

10. The control method of any one of claims 6 to 9, wherein, the controlling comprises controlling a driving assist unit when a lane of a road on which the vehicle is currently positioned is recognized or the position of the vehicle is detected.
